# EUROPEAN PATENT APPLICATION

(11) **EP 4 556 529 A1**
(43) Date of publication of application: **21.05.2025**
(21) Application number: 23839638.6
(22) Date of filing: 12.07.2023
(51) Int. Cl.: C08L 83/07, C08K 5/14, C08L 83/08

(54) **ACTINIC-RAY-CURABLE SILICONE COMPOSITION AND CURED OBJECT OBTAINED THEREFROM**

(30) Priority: 13.07.2022 JP 2022112752
(71) Applicant: Hikari Alphax Inc., Osaka-shi, Osaka 530-0005 (JP); The University of Tokyo, Bunkyo-ku, Tokyo 113-8654 (JP)
(72) Inventor: MATSUSHITA, Taishi, Osaka-shi, Osaka 530-0005 (JP); HIRAI, Nobuo, Osaka-shi, Osaka 530-0005 (JP); HARA, Shintaro, Tokyo 113-8654 (JP); TAKAI, Madoka, Tokyo 113-8654 (JP); NAKAGAWA, Takayuki, Tokyo 113-8654 (JP); UCHIDA, Kazuto, Tokyo 113-8654 (JP)
(74) Representative: Winter, Brandl - Partnerschaft mbB
(86) International application number: PCT/JP2023/025653
(87) International publication number: WO 2024/014466

(57) **Abstract**

The problem to be solved by the present invention is to provide a novel active energy ray-curable silicone composition that can produce a cured product with higher hardness than conventional active energy ray-curable silicone compositions, and to provide a cured product thereof. The present invention provides an active energy ray-curable silicone composition comprising the following A, B, and C components: A component: an organopolysiloxane having a thiol group, B component: an organopolysiloxane having an alkenyl group, and C component: an active energy ray reaction initiator, wherein the C component is contained in an amount of 0.01 to 20 parts by mass per 100 parts by mass of the sum of the A and B components.

## Description

### Technical Field

The present invention relates to an active energy ray-curable silicone composition and a cured product thereof.

### Background Art

Silicone has characteristics such as high heat resistance, water repellency, electrical insulation, excellent chemical resistance, excellent biocompatibility, oxygen permeability, and transparency, and is therefore used in various technical fields, including automotive applications, electronic devices, paints, medical devices, and 3D printing materials.

Active energy ray-curable silicone is used in various fields because it does not cure until it is irradiated with specific active energy rays, and it cures immediately after active energy ray irradiation.

Although active energy ray-curable silicone compositions with various structures have been proposed for various applications, the hardness of cured products of the active energy ray-curable silicone compositions are not always sufficient (PTL 1 to PTL 3). There is a strong demand for the development of active energy ray-curable silicone compositions with higher hardness.

In addition, an active energy ray-curable silicone composition with high hardness has been proposed (PTL 4); however, this composition is cured by utilizing radical polymerization of acrylic reactive groups, and has problems such as shrinkage during curing and poor curing due to oxygen inhibition.

### Citation List

### Patent Literature

PTL 1: JP5849298B
PTL 2: JP4788863B
PTL 3: JP6020740B
PTL 4: JP2021-88613A

### Summary of Invention

### Technical Problem

An object of the present invention is to provide a novel active energy ray-curable silicone composition that can produce a cured product with higher hardness than conventional active energy ray-curable silicone compositions.

### Solution to Problem

Under such circumstances, as a result of extensive research on active energy ray-curable silicone compositions of various formulations, the present inventors found that in an active energy ray-curable silicone composition comprising organopolysiloxanes cured by the reaction of thiol and alkenyl groups, and an active energy ray reaction initiator, combining an organopolysiloxane containing T units and D units, and an organopolysiloxane containing Q units as the organopolysiloxanes can increase the hardness of a cured product of the active energy ray-curable silicone composition. The present inventors further conducted extensive trial and error regarding the formulation of each organopolysiloxane, the type of active energy ray reaction initiator, the mixing ratio of each component, and the like. As a result, the present invention has been completed.

Therefore, the present invention provides the following items:
Item 1. An active energy ray-curable silicone composition comprising the following A, B, and C components:
   A component: an organopolysiloxane having a thiol group,
   B component: an organopolysiloxane having an alkenyl group, and
   C component: an active energy ray reaction initiator,
   wherein the C component is contained in an amount of 0.01 to 20 parts by mass per 100 parts by mass of the sum of the A and B components.
Item 2. The active energy ray-curable silicone composition according to Item 1, wherein the A component is an organopolysiloxane containing (a) R¹SiO_{3/2} units (wherein R¹ represents a thiol alkyl group) and (b) R²₂SiO_{2/2} units (wherein R² represents an alkyl group), and the molar ratio of (a) and (b) is in the range of 1:0 to 20.
Item 3. The active energy ray-curable silicone composition according to Item 1, wherein the B component is an organopolysiloxane containing (c) R³ₙSiO_{(4-n)/2} units (wherein one or more R³s each independently represent a C₁₋₁₀ monovalent hydrocarbon group, and n is an integer of 1 to 3) and (d) SiO_{4/2} units, the (c) units contain an alkenyl group as R³, and the molar ratio of the (c) and (d) units is in the range of 0.5 to 1.5:1.
Item 4. The active energy ray-curable silicone composition according to any one of Items 1 to 3, wherein the proportion of (c) units wherein n is 2 in the B component is less than 10 mol% based on all the constituent units of the B component.
Item 5. A cured product of the active energy ray-curable silicone composition according to any one of Items 1 to 4.
Item 6. The cured product of the active energy ray-curable silicone composition according to Item 5, which has a hardness of 10 to 65 as measured with a type D durometer according to JIS K 6253.

### Advantageous Effects of Invention

The present invention provides a novel active energy ray-curable silicone composition that can produce a cured product with higher hardness than conventional active energy ray-curable silicone compositions, and also provides a cured product thereof.

### Description of Embodiments

In the present specification, the singular forms ("a," "an," "the," etc.) are intended to include both the singular and the plural unless otherwise expressly stated herein or clearly contradictory in context.

### Active Energy Ray-Curable Silicone Composition and Cured Product Thereof

The present invention provides an active energy ray-curable silicone composition comprising the following A, B, and C components:
A component: an organopolysiloxane having a thiol group,
B component: an organopolysiloxane having an alkenyl group, and
C component: an active energy ray reaction initiator,
wherein the C component is contained in an amount of 0.01 to 20 parts by mass per 100 parts by mass of the sum of the A and B components.
The present invention also provides a cured product of the active energy ray-curable silicone composition.

In a preferred embodiment, the present invention provides an active energy ray-curable silicone composition comprising the following A, B, and C components:
A component: an organopolysiloxane containing (a) R¹SiO_{3/2} units (wherein R¹ represents a thiol alkyl group) and (b) R²₂SiO_{2/2} units (wherein R² represents an alkyl group), wherein the molar ratio of (a) and (b) is in the range of 1:0 to 20,
B component: an organopolysiloxane containing (c) R³ₙSiO_{(4-n)/2} units (wherein one or more R³s each independently represent a C₁₋₁₀ monovalent hydrocarbon group, and n is an integer of 1 to 3) and (d) SiO_{4/2} units, wherein the (c) units contain an alkenyl group as R³, and the molar ratio of the (c) and (d) units is in the range of 0.5 to 1.5:1, and
C component: an active energy ray reaction initiator, wherein the C component is contained in an amount of 0.01 to 20 parts by mass per 100 parts by mass of the sum of the A and B components.
The present invention also provides a cured product of the active energy ray-curable silicone composition.

In the present invention, examples of the monovalent hydrocarbon group include alkyl, alkenyl, alkynyl, cycloalkyl, and aryl groups.

In the present invention, the alkyl group refers to a linear or branched monovalent saturated hydrocarbon. More specifically, examples of the alkyl group include methyl, ethyl, n-propyl, i-propyl, n-butyl, i-butyl, t-butyl, n-pentyl, and n-hexyl groups. The number of carbon atoms in the alkyl group is, for example, 1 to 6, preferably 1 to 3, and more preferably 1.

In the present invention, the thiol alkyl group refers to an alkyl group having one or several (preferably 1 or 2, more preferably 1) thiol groups (mercapto groups). More specific examples of the thiol alkyl group include mercaptomethyl, 2-mercaptoethyl, 3-mercaptopropyl, 2-mercaptopropan-2-yl, 3,3-dimercaptopropyl, 4-mercaptobutyl, 1-mercapto-2-methylpropan-2-yl, 3-mercapto-2-methylpropyl, 5-mercaptopentyl, and 6-mercaptohexyl groups. The number of carbon atoms in the thiol alkyl group is, for example, 1 to 6, preferably 1 to 3, and more preferably 1.

In the present invention, the alkenyl group refers to a linear or branched monovalent hydrocarbon having at least one (preferably one) carbon-carbon double bond. More specific examples of the alkenyl group include vinyl, 1- or 2-propenyl, i-propenyl, 1-, 2-, or 3-butenyl, 2-methyl-2-propenyl, 2-, 3-, or 4-pentenyl, and 5-hexenyl groups. The number of carbon atoms in the alkenyl group is, for example, 2 to 6, preferably 2 or 3, and more preferably 2.

In the present invention, the alkynyl group refers to a linear or branched monovalent hydrocarbon having at least one (preferably one) carbon-carbon triple bond. More specific examples of the alkynyl group include ethynyl, 1- or 2-propynyl, 1-, 2-, or 3-butynyl, 1-methyl-2-propynyl, 2-, 3-, or 4-pentynyl, and 5-hexynyl groups. The number of carbon atoms in the alkynyl group is, for example, 2 to 6, preferably 2 or 3, and more preferably 2.

In the present invention, the cycloalkyl group refers to a cyclic monovalent hydrocarbon group. More specific examples include cyclopropyl, cyclobutyl, cyclopentyl, and cyclohexyl groups. The number of carbon atoms in the cycloalkyl group is, for example, 3 to 6, and preferably 3.

In the present invention, examples of the aryl group include phenyl, naphthyl, and biphenyl groups. The number of carbon atoms in the aryl group is, for example, 6 to 12, and preferably 6.

The active energy ray-curable silicone composition of the present invention contains an organopolysiloxane having a thiol group as the A component. The A component is preferably, for example, an organopolysiloxane containing (a) R¹SiO_{3/2} units (wherein R¹ represents a thiol alkyl group) and (b) R²₂SiO_{2/2} units (wherein R² represents an alkyl group), wherein the molar ratio of (a) and (b) is in the range of 1:0 to 20.

In the present invention, the number of carbon atoms in the thiol alkyl group represented by R¹ is, for example, preferably 1 to 6, more preferably 2 to 4, and even more preferably 3. The A component has multiple R¹s, and these R¹s may be the same or different.

In the present invention, the number of carbon atoms in the thiol alkyl group represented by R² is, for example, preferably 1 to 6, more preferably 1 to 3, and even more preferably 1. The A component has multiple R²s, and these R²s may be the same or different.

The molar ratio of the (a) and (b) units in the A component is in the range of 1:0 to 20, preferably 1:3 to 18, and more preferably 1:6 to 15.

In the present invention, the content (mol%) of constituent units contained in each component can be measured by 29Si NMR.

Even when all of the constituent units contained in the A component are (a) R¹SiO_{3/2} units and (b) R²₂SiO_{2/2} units, constituent units other than these units may also be contained. Examples of constituent units other than the (a) R¹SiO_{3/2} units and the (b) R²₂SiO_{2/2} units include units in which, as groups other than the mercaptoalkyl group in the (a) unit, alkyl groups such as methyl, ethyl, n-propyl, i-propyl, n-butyl, i-butyl, t-butyl, n-pentyl, and n-hexyl groups, cycloalkyl groups such as cyclopropyl, cyclobutyl, cyclopentyl, and cyclohexyl groups, and aryl groups such as phenyl, naphthyl, and biphenyl groups, are bonded to silicon atoms; units in which as groups other than the alkyl group in the (b) unit, cycloalkyl groups such as cyclopropyl, cyclobutyl, cyclopentyl, and cyclohexyl groups, and aryl groups such as phenyl, naphthyl, and biphenyl groups, are bonded to silicon atoms; and, of units represented by R¹ₘR³₃-ₘSiO_{1/2} (m is 0 to 3), those that do not have unsaturated hydrocarbon groups (e.g., alkenyl and alkynyl groups) as R³. In such an embodiment, the total amount of (a) R¹SiO_{3/2} units and (b) R²₂SiO_{2/2} units relative to the total amount of constituent units contained in the A component is not particularly limited, and is, for example, preferably 90 mol% or more, more preferably 95 mol% or more, and even more preferably 99 mol% or more.

The number of mercapto groups per unit weight in the A component is not particularly limited, but is, for example, preferably 0.6 to 5 mmol/g, more preferably 0.7 to 3 mmol/g, and even more preferably 0.8 to 1.75 mmol/g.

In the present invention, the A component can be produced, for example, by hydrolysis and condensation of raw materials containing R¹R⁴₃Si (R⁴ is a C₁₋₃ alkoxy group or Cl), which is chlorosilane or alkoxysilane corresponding to the (a) R¹SiO_{3/2} unit, and R²₂R⁴₂Si, which is chlorosilane or alkoxysilane corresponding to the (b) R²₂SiO_{2/2} unit, as well as optionally chlorosilanes or alkoxysilanes corresponding to constituent units other than the (a) R¹SiO_{3/2} unit and the (b) R²₂SiO_{2/2} unit. The use ratio of R¹R⁴₃Si and R²₂R⁴₂Si is not limited; however, for example, the amount of R²₂R⁴₂Si is preferably 0 to 20 mol, more preferably 3 to 18 mol, and even more preferably 6 to 15 mol, per mol of R¹R⁴₃Si. The ratio of the total amount of R¹R⁴₃Si and R²₂R⁴₂Si in the raw material monomer is not particularly limited, but is, for example, preferably 90% or more, more preferably 95 mol% or more, and even more preferably 99 mol% or more. The temperature of hydrolysis is not particularly limited, but is, for example, preferably 25 to 75°C, and more preferably 65 to 70°C. The time of hydrolysis is also not particularly limited, but is, for example, preferably 1 to 24 hours, and more preferably 1 to 12 hours. Hydrolysis may be carried out in the presence of a catalyst. In such an embodiment, examples of catalysts include acid catalysts, such as hydrochloric acid, sulfuric acid, nitric acid, formic acid, oxalic acid, acetic acid, trifluoroacetic acid, trifluoromethanesulfonic acid, phosphoric acid, acidic ion exchange resins, and various Lewis acids.

The temperature of the condensation reaction is not particularly limited, but is, for example, preferably 100 to 180°C, and more preferably 100 to 150°C. The time of the condensation reaction is also not particularly limited, and is, for example, preferably 1 to 24 hours, and more preferably 3 to 12 hours. The condensation reaction may be carried out in the presence of a catalyst. In such an embodiment, examples of catalysts include nitrogen-containing compounds, such as ammonia, primary amines, secondary amines, tertiary amines, and pyridine; basic ion exchange resins; hydroxides, such as potassium hydroxide; carbonates, such as potassium carbonate; carboxylates such as sodium acetate; various Lewis bases, and other basic catalysts.

The reaction solvent in these reactions is not particularly limited, and examples include benzene, toluene, xylene, or similar aromatic hydrocarbons; hexane, heptane, isooctane, or similar linear or partially branched saturated hydrocarbons; cyclohexane or similar aliphatic hydrocarbons; and mixed solvents thereof.

The active energy ray-curable silicone composition of the present invention contains, as the B component, an organopolysiloxane having an alkenyl group. The B component is preferably an organopolysiloxane containing (c) R³ₙSiO_{(4-n)/2} units (wherein one or more R³s each independently represents a C₁₋₁₀ monovalent hydrocarbon group, and n represents an integer of 1 to 3) and (d) SiO_{4/2} units, wherein the (c) units contain an alkenyl group as R³, and the molar ratio of the (c) and (d) units is in the range of 0.5 to 1.5 to 1.

In the present invention, the monovalent hydrocarbon group represented by R³ is preferably an alkyl group, an alkenyl group, or the like. The B component has multiple R³s, and these R³s may be the same or different. When the monovalent hydrocarbon group represented by R³ is an alkyl group, the number of carbon atoms therein is, for example, 1 to 6, preferably 1 to 3, and more preferably 1. When the monovalent hydrocarbon group represented by R³ is an alkenyl group, the number of carbon atoms therein is, for example, 2 to 6, preferably 2 or 3, and more preferably 2. Of the (c) units, the proportion of those containing an alkenyl group is, for example, preferably 8 mol% or more, more preferably 10 mol% or more, and even more preferably 12 mol% or more.

In order to obtain a very hard cured product of the active energy ray-curable silicone composition, the proportion of units (c) wherein n is 2 in the B component is preferably 10 mol% or less, more preferably 5 mol% or less, and even more preferably 1 mol% or less, based on all the constituent units of the B component.

The molar ratio of the (c) and (d) units in the B component is in the range of 0.5 to 1.5:1, preferably 0.6 to 1.1:2, and more preferably 0.7 to 1:1.

Even when all of the constituent units contained in the B component are (c) R³ₙSiO_{(4-n)/2} units and (d) SiO_{4/2} units, constituent units other than these units may also be contained. Examples of constituent units other than the (c) R³₍₄₋ₙ₎SiO_{(4-n)/2} units and the (d) SiO_{4/2} units include units in which, as groups other than the monovalent hydrocarbon group in the (c) unit, halogen-substituted hydrocarbon groups (e.g., chloromethyl, chlorophenyl, and 3,3,3-trifluoropropyl groups) are bonded to silicon atoms. In such an embodiment, the total amount of the (c) R³ₙSiO(_{4-n)/2} units and the (d) SiO_{4/2} units relative to the total amount of constituent units contained in the B component is not particularly limited, but is, for example, preferably 90 mol% or more, more preferably 95 mol% or more, and even more preferably 99 mol% or more.

The number of vinyl groups per unit weight in the B component is not particularly limited, but is, for example, preferably 0.6 to 5 mmol/g, more preferably 0.65 to 3 mmol/g, and even more preferably 0.7 to 2 mmol/g.

In the present invention, the B component can be produced, for example, by hydrolysis and condensation of raw materials containing R³ₙR⁴_{(4 -n)}Si, which is chlorosilane or alkoxysilane corresponding to the (c) R³ₙSiO_{(4-n)/2} unit, and R⁴₄Si, which is chlorosilane or alkoxysilane corresponding to the (d) SiO_{4/2} unit, as well as optionally chlorosilanes or alkoxysilanes corresponding to constituent units other than the (c) R³ₙSiO_{(4-n)/2} units and the (d) SiO_{4/2} units. The use ratio of R³ₙR⁴₍₄₋ₙ₎ Si and R⁴₄Si is not limited; however, for example, the amount of R⁴₄Si is preferably 0.5 to 1.5 mol, more preferably 0.6 to 1.2 mol, and even more preferably 0.7 to 1 mol, per mol of R³ₙR⁴₍₄₋ₙ₎ Si. Further, the ratio of the total amount of R³ₙR⁴₍₄₋ₙ₎ Si and R⁴₄Si in the raw material monomer is not particularly limited, but is, for example, preferably 90 mol % or more, more preferably 95 mol% or more, and even more preferably 99 mol% or more. The temperature of hydrolysis is not particularly limited, but is, for example, preferably 25 to 85°C, and more preferably 65 to 80°C. The time of hydrolysis is also not particularly limited, but is, for example, preferably 1 to 24 hours, and more preferably 1 to 12 hours. Hydrolysis may be carried out in the presence of a catalyst. In such an embodiment, examples of catalysts include acid catalysts, such as hydrochloric acid, sulfuric acid, nitric acid, formic acid, oxalic acid, acetic acid, trifluoroacetic acid, trifluoromethanesulfonic acid, phosphoric acid, acidic ion exchange resins, and various Lewis acids.

The temperature of the condensation reaction is not particularly limited, but is, for example, preferably 100 to 180°C, and more preferably 100 to 150°C. The time of the condensation reaction is also not particularly limited, but is, for example, preferably 1 to 24 hours, and more preferably 1 to 12 hours. The condensation reaction may be carried out in the presence of a catalyst. In such an embodiment, examples of catalysts include nitrogen-containing compounds, such as ammonia, primary amines, secondary amines, tertiary amines, and pyridine; basic ion exchange resins; hydroxides, such as potassium hydroxide; carbonates, such as potassium carbonate; carboxylates such as sodium acetate; various Lewis bases, and other basic catalysts.

The reaction solvent in these reactions is not particularly limited, and examples include benzene, toluene, xylene, or similar aromatic hydrocarbons; hexane, heptane, isooctane, or similar linear or partially branched saturated hydrocarbons; cyclohexane or similar aliphatic hydrocarbons; and mixed solvents thereof.

The active energy ray reaction initiator as the C component may be an active energy ray radical generator. Examples include, but are not limited to, benzyl or its dialkyl acetalbased compounds and acetophenone-based compounds, benzoin or its alkyl ether-based compounds, benzophenone-based compounds, thioxanthone-based compounds, and phosphine oxide-based compounds. Specific examples include, but are not limited to, 2,2-diethoxyacetophenone, 2,2-dimethoxy-1,2-diphenylethan-1-one, 1-hydroxy-cyclohexyl-phenyl-ketone, 2-hydroxy-2-methyl-1-phenyl-propan-1-one, 2-hydroxy-1-{4-[4-(2-hydroxy-2-methyl-propionyl)-benzyl]-phenyl}-2-methyl-propan-1-one, phenylglyoxylic acid methyl ester, 2-methyl-1-[4-(methylthio)phenyl]-2-morpholinopropan-1-one, 2-benzyl-2-dimethylamino-1-(4-morpholinophenyl)-1-butanone, bis(2,4,6-trimethylbenzoyl)-phenylphosphine oxide, 2,4,6-trimethylbenzoyl-diphenyl-phosphine oxide, and the like. These active energy ray reaction initiators can be used singly or in combination of two or more.

The active energy ray-curable silicone composition of the present invention contains the C component in an amount of 0.01 to 20 parts by mass, more preferably 0.05 to 5 parts by mass, and even more preferably 0.1 to 2 parts by mass, per 100 parts by mass of the sum of the A and B components.

The mixing ratio of the A and B components in the active energy ray-curable silicone composition of the present invention is not limited; however, for example, the number of alkenyl groups in the B component per thiol group in the A component within the composition can be in the range of 0.25 to 2, preferably 0.35 to 1.7, and more preferably 0.5 to 1.5. Further, the mixing ratio of the A component in the active energy ray-curable silicone composition of the present invention is not limited, but can be, for example, in the range of 20 to 70 mass%, preferably 25 to 60 mass%, and more preferably 30 to 55 mass%.

The active energy ray-curable silicone composition of the present invention may optionally contain components other than the A, B, and C components as long as the effects of the invention are not impaired.

For example, a polymerization inhibitor may be mixed in order to improve storage stability. Examples of polymerization inhibitors include hydroquinone, p-methoxyphenol, t-butylcatechol, phenothiazine, dibutylhydroxytoluene, p-benzoquinone, and the like. These polymerization inhibitors can be used singly or in combination of two or more. When a polymerization inhibitor is used, the mixing amount thereof is not particularly limited, but can be, for example, in the range of 0.001 to 0.5 parts by mass per 100 parts by mass of the sum of the A and B components.

A solvent may also be mixed in order to adjust the viscosity. Examples of solvents include aromatic solvents, such as toluene and xylene; aliphatic solvents, such as hexane, octane, and isoparaffin; ketone solvents, such as methyl ethyl ketone and methyl isobutyl ketone; ester solvents, such as ethyl acetate and isobutyl acetate; ether solvents, such as diisopropyl ether and 1,4-dioxane; and the like. These solvents can be used singly or in combination of two or more.

A photosensitizer may be mixed in order to initiate the reaction using active energy rays in a wavelength range in which the reaction cannot be initiated by the active energy ray reaction initiator. Examples of photosensitizers include heterocyclic and fused cyclic aromatic hydrocarbons, organic dyes, aromatic ketones, and various other compounds. These photosensitizers can be used singly or in combination of two or more.

Other examples include UV absorbers, colorants, flame retardants, conductive agents, thermal conductive agents, metals, fillers, silane coupling agents, antioxidants, defoamers, leveling agents, thermal radical generators, and the like.

The viscosity of the active energy ray-curable silicone composition of the present invention is not particularly limited; however, in terms of ease of handling, the viscosity at 23°C is preferably 100,000 mPa·s or less, more preferably 50,000 mPa·s or less, and even more preferably 20,000 mPa·s or less. The lower limit of the viscosity of the active energy ray-curable silicone composition of the present invention is not limited, but is, for example, 100 mPa·s or more, 500 mPa·s or more, 1,000 mPa·s or more, or 1,500 mPa·s or more, at 23°C. In the present invention, the viscosity of the active energy ray-curable silicone composition can be measured using a rotational viscometer according to JISK-7117-1.

In a preferred embodiment, the wavelength of the active energy rays for curing the active energy ray-curable silicone is not particularly limited as long as it is a wavelength at which the curing reaction is initiated by the active energy ray reaction initiator in the active energy ray-curable silicone composition or other additives, such as a photosensitizer, added separately. Examples of active energy rays include ultraviolet rays, electron beams, X-rays, visible light, infrared rays, highfrequency rays, and the like. Among these, ultraviolet rays having a wavelength of 300 nm to 410 nm are preferable from the point of view of economy. The light source is also not particularly limited, and examples include UV-LEDs, ultraviolet lasers, mercury lamps, xenon lamps, halogen lamps, fluorescent lamps, and the like. Active energy rays whose wavelength is converted by photon upconversion technology or the like into a wavelength at which the curing reaction is initiated may also be used. The amount of irradiation with active energy rays is not particularly limited as long as it does not impair the physical properties of the cured product, but is preferably 1 to 10,000 mJ/cm², and more preferably 1 to 1,000 mJ/cm². The temperature during irradiation is not particularly limited, but is preferably 0 to 80°C, and more preferably 20 to 60°C.

In the present invention, the use of the active energy ray-curable silicone composition is not limited; however, it is resistant to oxygen inhibition and has low curing shrinkage, and thus can be used in the field of coating and molding. For example, coating can be performed by applying the active energy ray-curable silicone composition of the present invention to an object by immersion or by using a bar coater, spray, spin coater, or the like, and then curing the composition by irradiation with active energy rays. As for molding, three-dimensional objects can be formed by injection molding or photolithography. Examples of photolithography include digital light processing (DLP) type, liquid crystal display (LCD) type, stereolithography apparatus (SLA) method, inkjet type, and the like.

In the present invention, the term "active energy ray-curable silicone composition" includes both a liquid active energy ray-curable silicone composition and its cured product obtained by active energy ray irradiation. Therefore, in an embodiment, the present invention provides a cured product of the active energy ray-curable silicone composition.

In such an embodiment, the cured product of the active energy ray-curable silicone composition preferably has a hardness of 10 to 65, and more preferably 15 to 55, as measured with a type D durometer according to JIS K 6253.

The active energy ray-curable silicone composition of the present invention can be used for various applications, such as biological implants, coatings, medical equipment, models, microchannels, sensors, molding materials, molds, adhesives, electronic devices, automotive parts, cell culture scaffolds, and optical devices.

### Examples

### A component

### Synthesis Example 1 (TSHD6)

In a 300 mL separable flask equipped with a water meter receiver, a cooling reflux tube, and a thermometer, 100 g of dimethyldimethoxysilane and 27.31 g of 3-mercaptopropyltrimethoxysilane were mixed to give a 70% xylene solution, and 45.48 g of 0.4% hydrochloric acid was added dropwise. Hydrolysis was carried out with heating and stirring at 70°C for 90 minutes. After completion of the reaction, the aqueous phase was separated, neutralized with sodium hydrogen carbonate, and then dehydrated by heating at 100°C to 125°C. After completion of dehydration, 0.58 g of a 1% aqueous potassium hydroxide solution was added, followed by heating and stirring at 140 to 145°C for 5 hours to carry out a condensation reaction. After neutralization with phosphoric acid, the resultant was filtered, and the remaining xylene was removed under heating and reduced pressure to obtain 58.90 g of mercaptopropyl group-containing polymethylsiloxane (A-1). The contents (mol%) of {HS(CH₂)₃SiO_{3/2}} units and {(CH₃)₂SiO_{2/2}} units in the resulting polymethylsiloxane were measured by 29Si NMR (the same applies to the following synthesis examples). The number of mercapto groups per unit weight was calculated from the contents of {HS(CH₂)₃SiO_{3/2}} units and {(CH₃)₂SiO_{2/2}} units in the resulting polymethylsiloxane.
Average structural formula: [{HS(CH₂)₃SiO_{3/2}}{(CH₃)₂SiO_{2/2}}₆]ₙ
Number of mercapto groups per unit weight: 1.75 mmol/g.

### Synthesis Example 2 (TSHD9)

The reaction was carried out under the same conditions, except that the amount of 3-mercaptopropyltrimethoxysilane in Synthesis Example 1 was changed to 18.15 g. 50.78 g of mercaptopropyl group-containing polymethylsiloxane (A-2) was obtained.
Average structural formula: [{HS(CH2)₃SiO_{3/2}}{(CH₃)₂SiO_{2/2}}₉]ₙ
Number of mercapto groups per unit weight: 1.26 mmol/g.

### Synthesis Example 3 (TSHD12)

The reaction was carried out under the same conditions, except that the amount of 3-mercaptopropyltrimethoxysilane in Synthesis Example 1 was changed to 13.67 g. 48.19 g of mercaptopropyl group-containing polymethylsiloxane (A-3) was obtained.
Average structural formula: [{HS(CH2)₃SiO_{3/2}}{(CH₃)₂SiO_{2/2}}₁₂]ₙ
Number of mercapto groups per unit weight: 0.98 mmol/g.

### Synthesis Example 4 (TSHD15)

The reaction was carried out under the same conditions, except that the amount of 3-mercaptopropyltrimethoxysilane in Synthesis Example 1 was changed to 10.89 g. 46.75 g of mercaptopropyl group-containing polymethylsiloxane (A-4) was obtained.
Average structural formula: [{HS(CH2)₃SiO_{3/2}}{(CH₃)₂SiO_{2/2}}₁₅]ₙ
Number of mercapto groups per unit weight: 0.80 mmol/g.

### Synthesis Example 5 (TSHD21)

The reaction was carried out under the same conditions, except that the amount of 3-mercaptopropyltrimethoxysilane in Synthesis Example 1 was changed to 7.78 g. 40.35 g of mercaptopropyl group-containing polymethylsiloxane (A-5) was obtained.
Average structural formula: [{HS(CH2)₃SiO_{3/2}}{(CH₃)₂SiO_{2/2}}₂₁]ₙ
Number of mercapto groups per unit weight: 0.59 mmol/g.
B component: xylene-free VQX-221, produced by Gelest, number of vinyl groups per unit weight: 0.74
C component: an active energy ray polymerization initiator: a mixture of 2-hydroxymethyl-1-phenylpropan-1-one (Tokyo Chemical Industry Co., Ltd.) and phenylbis(2,4,6-trimethylbenzoyl)phosphine oxide (Tokyo Chemical Industry Co., Ltd.) (weight ratio: 7/3)
Other components: a polymerization inhibitor: p-methoxyphenol (Wako Pure Chemical Corporation).

### Examples 1 to 5 and Comparative Example 1

The (A) to (D) components were mixed according to the formulations shown in Table 1 to prepare each silicone composition shown in Table 1. In Examples 1 to 4 and Comparative Example 1, the A and B components were prepared so that the thiol/vinyl ratio was 1/1 (molar ratio), and in Example 5, the A and B components were prepared so that the thiol/vinyl ratio was 1.3/1 (molar ratio). The viscosity of each composition in Table 1 is a value measured using a rotational viscometer according to JIS K-7117-1, with a spindle number of 6 at a rotational speed of 20 rpm and 23°C.

Each composition was poured into a frame (25 mm x 60 mm), formed into a sheet of 2 mm thickness, and cured by irradiation with light of a wavelength of 395 to 400 nm for 2 minutes at room temperature (about 23°C) using an ultraviolet curing light (SPEED-HD395-400, produced by Sea Force Co., Ltd.). The hardness of each cured product was measured according to JIS K 6253 (with a type D durometer).

**Table 1**

| | | Example 1 | Example 2 | Example 3 | Example 4 | Example 5 | Comparative Example 1 |
|---|---|---|---|---|---|---|---|
| Formulation (parts by mass) | A-1 | 30 | | | | | |
| | A-2 | | 36 | | | | |
| | A-3 | | | 43 | | 50 | |
| | A-4 | | | | 48 | | |
| | A-5 | | | | | | 55 |
| | B | 70 | 64 | 57 | 52 | 50 | 45 |
| | C | 1 | 1 | 1 | 1 | 1 | 1 |
| | Other components | 0.1 | 0.1 | 0.1 | 0.1 | 0.1 | 0.1 |
| Physical properties of composition | Viscosity (mPa·s) | 84,800 | 20,800 | 16,400 | 2,000 | 3,200 | 300 |
| Physical properties of cured product | Hardness (type D) | 50 | 30 | 23 | 18 | 21 | Not measurable |

## Claims

1. An active energy ray-curable silicone composition comprising the following A, B, and C components:
A component: an organopolysiloxane having a thiol group,
B component: an organopolysiloxane having an alkenyl group, and
C component: an active energy ray reaction initiator,
wherein the C component is contained in an amount of 0.01 to 20 parts by mass per 100 parts by mass of the sum of the A and B components.

2. The active energy ray-curable silicone composition according to claim 1, wherein the A component is an organopolysiloxane containing (a) R¹SiO_{3/2} units (wherein R¹ represents a thiol alkyl group) and (b) R²₂SiO_{2/2} units (wherein R² represents an alkyl group), and the molar ratio of (a) and (b) is in the range of 1:0 to 20.

3. The active energy ray-curable silicone composition according to claim 1, wherein the B component is an organopolysiloxane containing (c) R³ₙSiO_{(4-n)/2} units (wherein one or more R³s each independently represent a C₁₋₁₀ monovalent hydrocarbon group, and n is an integer of 1 to 3) and (d) SiO_{4/2} units, the (c) units contain an alkenyl group as R³, and the molar ratio of the (c) and (d) units is in the range of 0.5 to 1.5:1.

4. The active energy ray-curable silicone composition according to any one of claims 1 to 3, wherein the proportion of units wherein n is 2 in the B component is less than 10 mol% based on all the constituent units of the B component.

5. A cured product of the active energy ray-curable silicone composition according to any one of claims 1 to 3.

6. The cured product of the active energy ray-curable silicone composition according to claim 5, which has a hardness of 10 to 65 as measured with a type D durometer according to JIS K 6253.
